Europäisches Patentamt

European Patent Office

Office européen des brevets

(19)

(11) **EP 1 093 690 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(21) Anmeldenummer: **99927812.0**

(22) Anmeldetag: **31.05.1999**

(51) Int Cl.:
***G10L 19/00*** *(2006.01)*

(86) Internationale Anmeldenummer:
**PCT/EP1999/003765**

(87) Internationale Veröffentlichungsnummer:
**WO 1999/063520 (09.12.1999 Gazette 1999/49)**

(54) **VERFAHREN UND ANORDNUNG ZUR FEHLERVERDECKUNG**

METHOD AND DEVICE FOR MASKING ERRORS

PROCEDE ET DISPOSITIF POUR LE MASQUAGE D'ERREURS

(84) Benannte Vertragsstaaten:
**DE FR GB**

(30) Priorität: **29.05.1998 EP 98109868**

(43) Veröffentlichungstag der Anmeldung:
**25.04.2001 Patentblatt 2001/17**

(73) Patentinhaber: **SIEMENS AKTIENGESELLSCHAFT**
**80333 München (DE)**

(72) Erfinder:
• XU, Wen
**D-82008 Unterhaching (DE)**
• HEINEN, Stefan
**D-52849 Düren (DE)**

(56) Entgegenhaltungen:
• **ALAJAJI F I ET AL: "CHANNEL CODES THAT EXPLOIN THE RESIDUAL REDUNDANCY IN CELP-ENCODED SPEECH" IEEE TRANSACTIONS ON SPEECH AND AUDIO PROCESSING, Bd. 4, Nr. 5, 1. September 1996 (1996-09-01), Seiten 325-335, XP000785309 ISSN: 1063-6676**

• **ITO H ET AL: "An adaptive multi-rate speech codec based on MP-CELP coding algorithm for ETSI AMR standard" PROCEEDINGS OF THE IEEE INTERNATIONAL CONFERENCE ON ACOUSTICS, SPEECH AND SIGNAL PROCESSING, ICASSP '98, SEATTLE, WA, USA, 12. - 15. Mai 1998, Seiten 137-140 vol.1, XP002115821 IEEE, New York, NY, USA. ISBN: 0-7803-4428-6**

• **T FINGSCHEIDT UND P VARY: "Error Concealment by Softbit Speech Decoding" ITG-FACHTAGUNG SPRACHKOMMUNIKATION, 17. September 1996 (1996-09-17), Seite 7 10 XP002075522 in der Anmeldung erwähnt**

• **HEINEN S ET AL: "A 6.1 to 13.3-kb/s variable rate CELP codec (VR-CELP) for AMR speech coding" PROCEEDINGS IEEE INTERNATIONAL CONFERENCE ON ACOUSTICS, SPEECH, AND SIGNAL PROCESSING, ICASSP '99, PHOENIX, AZ, USA, 15. - 19. März 1999, Seiten 9-12 vol.1, XP002115822 IEEE, Piscataway, NJ, USA. ISBN: 0-7803-5041-3**

• **GORTZ N: "Joint source channel decoding using bit-reliability information and source statistics" PROCEEDINGS IEEE INTERNATIONAL SYMPOSIUM ON INFORMATION THEORY, CAMBRIDGE, MA, USA, 16-21 AUG. 1998, 16. - 21. August 1998, Seite 9 XP002116176 ieee, New York, NY, USA. ISBN: 0-7803-5000-6**

EP 1 093 690 B1

**Beschreibung**

Die Erfindung bezieht sich auf Verfahren und Anordnungen zur Fehlerverdeckung bei Übertragung bzw. Speicherung digitaler Daten, insbesondere bei Anwendung einer Quellencodierung (z.B. Sprachcodierung nach dem CELP-Prinzip). Im Rahmen der Erfindung versteht man unter Übertragung (Senden und/oder Empfangen) auch die Übertragung von Daten auf/von ein/einem Speichermedium, also auch das Speichern von Daten.

Quellensignale bzw. Quelleninformationen wie Sprach-, Ton-, Bild- und Videosignale beinhalten fast immer statistische Redundanz, also redundante Informationen. Durch eine Quellencodierung kann diese Redundanz stark verringert werden, so daß eine effiziente Übertragung bzw. Speicherung des Quellensignals ermöglicht wird. Diese Redundanzreduktion beseitigt vor der Übertragung redundante Signalinhalte, die auf der Vorkenntnis von z.B. Statistiken des Signalverlaufs beruhen. Die Bitrate der quellencodierten Informationen wird auch Codierrate oder Quellbitrate genannt. Nach der Übertragung werden bei der Quellendecodierung diese Anteile dem Signal wieder zugesetzt, so daß objektiv und/oder subjektiv kein Qualitätsverlust nachweisbar ist.

Auf der anderen Seite ist es üblich, bei der Signalübertragung, gezielt Redundanz durch Kanalcodierung wieder hinzuzufügen, um die Beeinflussung der Übertragung durch Kanalstörungen weitgehend zu beseitigen. Durch zusätzliche redundante Bits wird es dem Empfänger bzw. Decoder ermöglicht, Fehler zu erkennen und eventuell auch zu korrigieren. Die Bitrate der kanalcodierten Informationen wird auch Bruttobitrate genannt.

Um Informationen, insbesondere Sprachdaten, Bilddaten oder andere Nutzdaten mittels der begrenzten Übertragungskapazitäten eines Übertragungsmediums, insbesondere einer Funkschnittstelle möglichst effizient übertragen zu können, werden diese zu übertragenden Informationen also vor der Übertragung durch eine Quellencodierung komprimiert und durch eine Kanalcodierung gegen Kanalfehler geschützt. Dazu sind jeweils unterschiedliche Verfahren bekannt. So kann beispielsweise im GSM (Global System for Mobile Communication) System Sprache mittels eines Full Rate Sprachcodecs eines Half Rate Sprachcodecs oder eines Enhanced Full Rate Sprachcodecs codiert werden.

Als Sprachcodec wird im Rahmen dieser Anmeldung auch ein Verfahren zur Encodierung und/oder zur entsprechenden Decodierung bezeichnet, das auch eine Quellen und/oder Kanalcodierung umfassen kann.

Restbitfehler, die von der Kanaldecodierung nicht korrigiert werden können, führen mitunter zu einer erheblichen Beeinträchtigung der Sprachwiedergabe. Ein zusätzliches Verfahren zur Fehlerverdeckung ist in der Lage, die subjektiv empfundene Wiedergabequalität deutlich zu verbessern.

Im GSM-System wird beispielsweise im Falle einer Rahmenauslöschung der zuletzt korrekt empfangene Sprachrahmen anstelle des momentanen wiederholt. Nach fünf aufeinanderfolgenden gestörten Rahmen wird stufenweise stummgeschaltet. Dieses Verfahren wird durch einen binäre Rahmenzuverlässigkeitsinformation, den *Bad Frame Indicator* (BFI) gesteuert.

Durch eine konsequente Erweiterung der vom Kanaldecoder an den Sprachdecoder weitergegebenen Zuverlässigkeitsinformation kann zur Fehlerverdeckung die Softbit-Sprachdecodierung eingesetzt werden. Hierbei sind Verfahren bekannt (Tim Fingscheidt, Peter Vary, "Error Concealment by Softbit Speech Decoding", ITG Fachbericht Nr. 139 "Sprachkommunikation", S. 7-10, Frankfurt a.M.,1996), bei welchen Methoden der Entscheidungs- und Schätztheorie zum Einsatz kommen und im folgenden kurz erläutert werden.

Für die Mehrzahl der beispielsweise durch einen CELP-Sprachcodec bestimmten Sprachparameter erweist sich das Signal- zu Rauschleistungsverhältnis (SNR) zwischen gesendetem und empfangenen Parameterwert als aussagekräftiges Gütekriterium. So sind subjektiv empfundene Sprachqualität und Parameter-SNR in der Regel gut korreliert.

Aus diesem Grund ist ein Parameterdecoder (z.B. ein auf CELP basierender Sprachcoder) sinnvoll, der dieses SNR zwischen einem gesendeten Parameter (der aber nicht auf Sprachparameter eingeschränkt ist) X und dem entsprechend decodierten Parameter $\hat{X}$ im Mittel maximiert bzw. ihre quadratische Differenz minimiert, d.h.

$$\hat{X} = \arg \min_{\tilde{X}} E\{ (X - \tilde{X})^2 \} \qquad (1.1)$$

Zur Übertragung des wertekontinuierlichen Parameters X muß zunächst eine Codierung durch die Bitsequenz $\{x_1,..x_w\}$ vorgenommen werden. Dies erfolgt in der Regel durch Quantisierung. Dazu wird der gesamte Wertebereich des Parameters X in $2^w$ Intervalle (bzw. Zellen bei Vektorquantisierung) $S_i$ zerlegt. Jeder dieser Zellen ist jeweils eine eindeutige Sende-Bitsequenz $x_i = \{x_1(i),..x_w(i)\}$ zugeordnet.

Als Übertragungskanal wird nun ein Kanal mit binärem Eingang x und wertekontinuierlichem Ausgang z angenommen. Dabei sind die am Ausgang beobachteten Werte z von den Eingangswerten x und einem zunächst nicht näher spezifizierten Zufallsprozeß abhängig. Es wird lediglich statistische Unabhängigkeit für Störungen vorausgesetzt, die auf aufeinanderfolgende Bitsequenzen bzw. Parameter wirken. Dieser Kanal läßt sich durch die Likelihood-Funktion

$P_{z|x}(Z_1, ..Z_W|X_1, ..x_w)$ vollständig beschreiben.

Der Erwartungswert in (1.1) ist somit durch zwei Zufallsprozesse bestimmt: Durch den parametererzeugenden Prozeß X und die beobachteten Empfangswerte z, also

$$E_{X,\{z1,...,zW\}}\left\{\left[X - \tilde{X}(z_1,..,z_W)\right]^2\right\}$$
$$= \int_{z_1,...,z_W}\int_X \left[X - \tilde{X}(z_1,..,z_W)\right]^2 p_{x,z_1,...,z_W}(X, z_1,..,z_W)dX dz_1..dz_W. \qquad (1.2)$$

Da der Integrand immer positiv ist, kann der Erwartungswert minimiert werden, indem das innere Integral hinsichtlich $\tilde{X}$ für jede mögliche Empfangsfolge $\{Z_1, ..,Z_W\}$ minimiert wird. Man erhält die Formel des *Mean Square* (MS) -Schätzers

$$\tilde{X}_{opt} = \int_X X \cdot p_{x|z_1,..,z_W}(X | z_1,..,z_W)dX \qquad (1.3)$$

Berücksichtigt man die sendeseitige Quantisierung, ergibt sich weiter

$$\tilde{X}_{opt} = \sum_i \int_{X \in S_i} X \cdot \frac{p_{z_1,..,z_W|x}(z_1,..,z_W | X) \cdot p_x(X)}{p_{z_1,..,z_W}(z_1,..,z_W)}dX. \qquad (1.4)$$

Da für alle $X \in S_i$ die gleiche Bitsequenz $X_i$ gesendet wird, ist die bedingte Wahrscheinlichkeit im Zähler eine Konstante bzgl. der Integration und es folgt

$$\tilde{X}_{opt} = \sum_i \frac{p_{z_1,..,z_W|x}(z_1,..,z_W | x_i)}{p_{z_1,..,z_W}(z_1,..,z_W)} \int_{X \in S_i} X \cdot p_x(X)dX$$
$$= \sum_i \frac{p_{z_1,..,z_W|x}(z_1,..,z_W | x_i)}{p_{z_1,..,z_W}(z_1,..,z_W)} \cdot E(X | x_i) \cdot \Pr(x_i) \qquad (1.5)$$
$$= \sum_i E(X | x_i) \cdot \Pr(x_i | z_1,..,z_W)$$

Ist der parametererzeugende Prozeß X nicht gedächtnislos, so bestehen zusätzlich statistische Bindungen zwischen aufeinanderfolgenden Parameterwerten bzw. Bitsequenzen x.

Eine analoge Ableitung ergibt dann unter Berücksichtigung des Zeitindex n

$$\tilde{X}_{opt}(n) = \sum_i E(X | x_i) \cdot \Pr(x_i | z_1(n),..,z_W(n),..,z_1(0),..,z_W(0)). \qquad (1.6)$$

Im folgenden wird gezeigt, wie die a posteriori Wahrscheinlichkeiten in (1.5) und (1.6) bestimmt werden können:

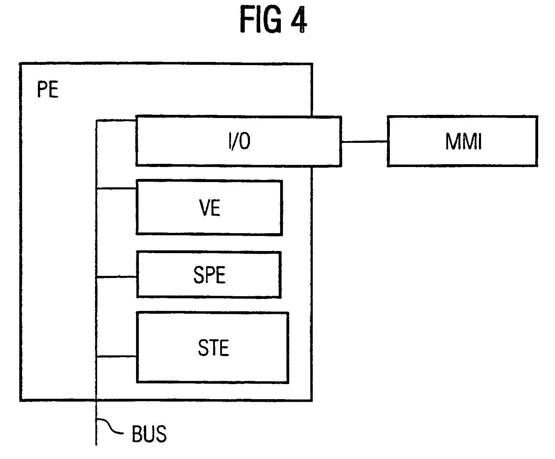

Vereinfachend wird dabei angenommen, daß der zwischen einem Quellencoder und einem Quellendecoder befindliche Übertragungskanal, bestehend aus Kanalcoder, Modulator, physikalischem Kanal, Demodulator, Entzerrer und Kanaldecoder, als additiv gestörter, auf Bitebene gedächtnisloser Kanal mit binärem Eingang x und kontinuierlichem Ausgang z aufgefaßt werden kann, wie in Figur 3 gezeigt. Dabei ist der Quellencoder vereinfacht durch einen Prametercodierer PC und der Quellendecoder vereinfacht durch einen Schätzer S dargestellt. Dieser Kanal ist durch die Likelihood-Funktion $p_{z|y}(z_k \mid y_k)$ bzw. durch die L-Werte $L(Z_k \mid x_k)$ vollständig beschrieben. Zunächst soll die a posteriori Wahrscheinlichkeit für weiße Parameterquellen gem. (1.5) angegeben werden. Dazu wird die Bayes-Formel angewendet

$$\Pr(x_i \mid z_1,..,z_W) = \frac{p_{z_1,..,z_W|x}(z_1,..,z_W \mid x_i)}{\sum_j p_{z_1,..,z_W|x}(z_1,..,z_W \mid x_j) \cdot \Pr(x_j)} \cdot \Pr(x_i) \qquad (1.7)$$

Hierin sind nun alle Größen bekannt: Die Likelihood-Funktion $Pz_1,..z_W|x(z_1,..,z_W|x_i)$ ist durch die Kanaleigenschaften gegeben und $\Pr(x_i)$ ist die a priori Wahrscheinlichkeit, daß die Bitsequenz $x_i$ gesendet wird. Diese Wahrscheinlichkeiten werden vorab für alle i anhand repräsentativer Signaldaten (z.B. Sprachprobe bei Sprachcodierung) gemessen.

Da ein auf Bitebene gedächtnisloser Kanal vorausgesetzt wurde, kann die Likelihood-Funktion als Produkt geschrieben werden

$$p_{z_1,..,z_W|x}(z_1,..,z_W \mid x_j) = \prod_{k=1}^{W} p_{z|x}(z_k \mid x_k(i)) \quad . \qquad (1.8)$$

Wird dem Quellendecoder Zuverlässigkeitsinformation über den Parameter X in Form einer L-Wertesequenz $\{L(z_1|x_1),..,L(z_W|x_W)\}$ bereitgestellt, so kann (1.8) im logarithmischen Bereich effizient berechnet werden. Es ergibt sich

$$p_{z_1..z_W|x}(z_1,..,z_W \mid x_i) = C \cdot \exp\left(\sum_{k \in \{k|x_k(i)=+1\}} L(z_k \mid x_k)\right) \qquad (1.9)$$

Dabei ist C eine Konstante, die durch die Normierungsbedingung

$$\sum_i \Pr(x_i \mid z_1,..,z_W) = 1 \qquad (1.10)$$

ermittelt werden kann.

Ist die Parameterquelle X nicht weiß, d.h. besteht eine statistische Abhängigkeit zwischen aufeinanderfolgenden Ausgangswerten, so kann die Quelle durch eine Markov-Kette modelliert werden. Hier soll nur der Fall einer Markov-Kette 1. Ordnung betrachtet werden. In diesem Fall gilt mit $z_n = \{z_1(n), .., z_W(n)\}$

$$\Pr(x_j(n) \mid z_n, z_{n-1}, .., z_0) = \frac{p(z_n, .., z_0 \mid x_j(n))}{p(z_n, .., z_0)}$$

$$= p(z_n \mid x_j(n)) \cdot \frac{\sum_j p(x_j(n), x_j(n-1), z_{n-1}, .., z_0)}{p(z_n, .., z_0)}$$

$$= \underbrace{\frac{p(z_{n-1}, .., z_0)}{p(z_n, .., z_0)}}_{const.} \cdot p(z_n \mid x_j(n)) \cdot \sum_j \Pr(x_j(n) \mid x_j(n-1)) \cdot \Pr(x_j(n-1) \mid z_{n-1}, .., z_0)$$

$$(1.11)$$

Auf die Indizes der Verteilungsdichtefunktionen wurde bei der Herleitung aus Gründen der Übersichtlichkeit verzichtet. Der Bruch in (1.11) ist eine Konstante bzgl. $x_i(n)$ und kann mit Hilfe der Normierungsbedingung (1.10) bestimmt werden. Die Übergangswahrscheinlichkeiten (Pr $(x_i (n) | x_j (n-1))$ der Markov-Kette müssen ebenso wie die a priori Wahrscheinlichkeiten an einer langen Ausgangsfolge der Parameterquelle gemessen werden.

Eine Erweiterung dieser Rekursionsformel auf Markov-Ketten höherer Ordnung ist zwar direkt möglich, die dadurch verursachte Erhöhung von Rechenkomplexität und Speicherplatzbedarf steht jedoch in der Regel in keinem Verhältnis zum Zugewinn an Schätzgenauigkeit.

Der Erfindung liegt nun das Problem zugrunde, ein Verfahren und eine Anordnung zur Fehlerverdeckung anzugeben, die eine Rekonstruktion von Quellensignalen aus über einen fehlerbehafteten Übertragungskanal übertragenen Signaldaten mit guter Qualität ermöglicht.

Dieses Problem wird gemäß den Merkmalen der unabhängigen Patentansprüche gelöst. Weiterbildungen der Erfindung ergeben sich aus den abhängigen Ansprüchen.

Die Erfindung beruht demnach auf dem Gedanken, Redundanz, die im Sendesignal nach der Quellencodierung noch enthalten ist, bzw. explizit in Form von Kanalcodierung hinzugefügt wird, empfangsseitig nicht für eine Fehlererkennung- bzw. korrektur zu verwenden, sondern für eine im Sinne eines Qualitätsmaßes optimale Schätzung auszunutzen.

Dadurch ist es mögöich, die Fehlerverdeckung mit einer besseren Qualität durchzuführen.

Ausführungsbeispiele werden nachfolgend anhand der folgenden Zeichnungen dargestellt und erläutert.

Figur 1    schematische Darstellung wesentlicher Elemente einer nachrichtentechnischen Übertragungskette;
Figur 2    schematische Darstellung eines auf dem CELP-Prinzip basierenden AMR-Coders;
Figur 3    Schematische Darstellung der Übertragung eines Sprachparameters;
Figur 4    Prinzipschaltbild einer Prozessoreinheit.

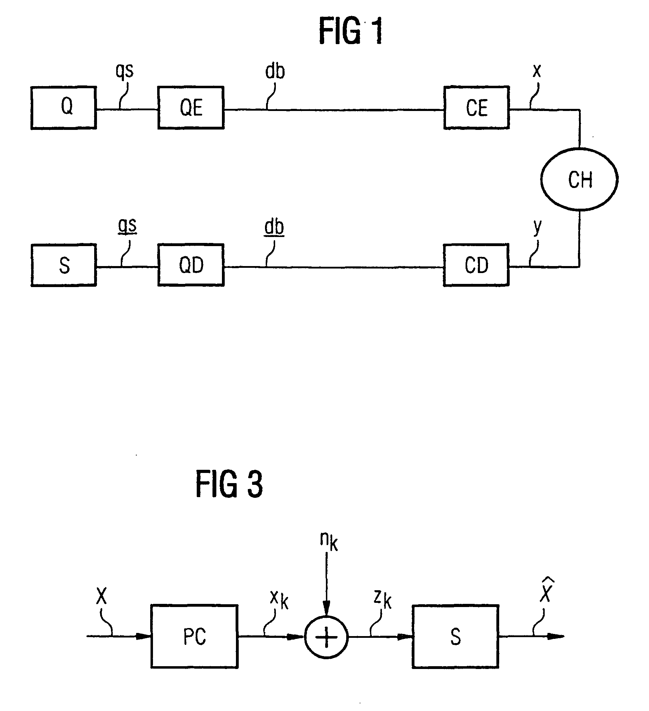

Figur 1 zeigt eine Quelle Q, die Quellensignale qs erzeugt, die von einem Quellencodierer QE, wie dem GSM fullrate Sprachcodierer, zu aus Symbolen bestehenden Symbolfolgen komprimiert werden. Bei parametrischen Quellencodierverfahren werden die von der Quelle Q erzeugten Quellensignale qs (z.B. Sprache) in Blöcke unterteilt (z.B. zeitliche Rahmen) und verarbeitet. Der Quellencodierer QE erzeugt quantisierte Parameter (z.B. Sprachparameter), die im folgenden auch als Symbole einer Symbolfolge bezeichnet werden, und die die Eigenschaften der Quelle im aktuellen Block auf eine gewisse Weise widerspiegeln (z.B. Spektrum der Sprache in Form von Filterkoeffizienten, Amplitudenfaktoren, Anregungsvektoren). Diese Symbole weisen nach der Quantisierung einen bestimmten Symbolwert auf.

Die Symbole der Symbolfolge bzw. die entsprechenden Symbolwerte werden durch eine binäre Abbildung (Zuordnungsvorschrift), die häufig als Teil der Quellencodierung QE beschrieben wird, auf eine Folge binärer Codewörter abgebildet, die jeweils mehrere Bitstellen aufweisen. Werden diese binären Codewörter beispielsweise nacheinander als Folge binärer Codewörter weiterverarbeitet, so entsteht eine Folge von quellencodierten Bitstellen, die in einer Rahmenstruktur eingebettet sein können. Nach einer derart durchgeführten Quellcodierung liegen also Quellbits oder Datenbits db mit einer von der Art der Quellcodierung abhängigen Quellbitrate (Codierrate) strukturiert in Rahmen vor.

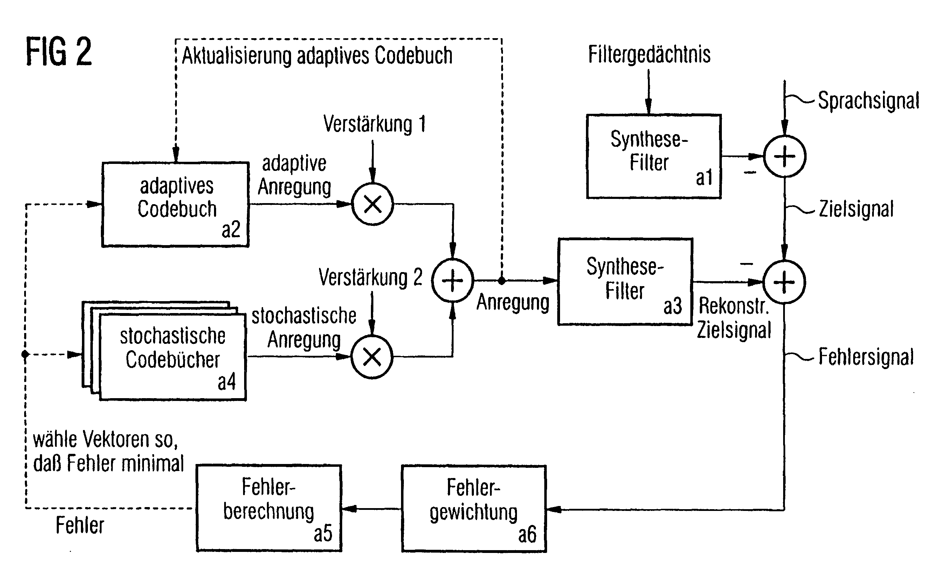

Figur 2 zeigt in einer Prinzipdarstellung eine spezielle Variante eines Quellcoders, insbesondere eines Sprachcoders, nämlich einen auf einem CELP (Code Excited Linear Predictive) -Prinzip basierenden Sprachcoder.

Beim CELP-Prinzip handelt es sich um ein Analyse-durch-Synthese-Verfahren. Hierbei wird eine aus dem aktuellen Sprachabschnitt gewonnene Filterstruktur durch nacheinander einem Codebuch entnommene Anregungsvektoren (Codevektoren) angeregt. Das Ausgangssignal des Filters wird mittels eines geeigneten Fehlerkriteriums mit dem aktuellen Sprachabschnitt verglichen und der fehlerminimierende Anregungsvektor selektiert. Zum Empfänger übertragen wird eine Darstellung der Filterstruktur sowie die Platznummer des selektierten Anregungsvektors.

Eine spezielle Variante eines CELP-Verfahrens verwendet ein algebraisches Codebuch, das auch oft als sparse-algebraiccode bezeichnet wird. Es ist ein Multipulscodebuch, das mit binären (+/-1) oder ternären Pulsen (0, +/-1) gefüllt ist. Innerhalb der Anregungsvektoren sind jeweils nur wenige Positionen mit Pulsen besetzt. Nach Auswahl der Positionen wird der gesamte Vektor mit einem Amplitudenfaktor gewichtet. Ein derartiges Codebuch weist mehrere Vorteile auf. Zum einen belegt es keinen Speicherplatz, da die erlaubten Positionen der Pulse durch eine algebraische Rechenvorschrift ermittelt werden, zum anderen kann es aufgrund seiner Konstruktion sehr effizient nach den besten Pulspositionen durchsucht werden.

Im folgenden wird anhand der Figur 2 zunächst eine Ausführungsvariante eines herkömmlichen CELP-Coders beschrieben. Ein zu approximierendes Zielsignal wird durch Absuchen zweier Codebücher nachgebildet. Dabei unterscheidet man zwischen einem adaptiven Codebuch (a2), dessen Aufgabe die Nachbildung der harmonischen Sprachanteile ist und einem stochastischen Codebuch (a4), das zur Synthese der nicht durch Prädiktion gewinnbaren Sprachanteile dient. Das adaptive Codebuch (a2) ändert sich abhängig vom Sprachsignal, während das stochastische Codebuch (a4) zeitinvariant ist. Die Suche nach den besten Anregungs-Codevektoren läuft derart ab, daß nicht eine gemeinsame, d.h. gleichzeitige Suche in den Codebüchern stattfindet, wie es für eine optimale Auswahl der Anregungs-Codevektoren erforderlich wäre, sondern aus Aufwandsgründen zunächst das adaptive Codebuch (a2) durchsucht wird. Ist der gemäß des Fehlerkriteriums beste Anregungs-Codevektor gefunden, subtrahiert man dessen Beitrag zum rekonstruierten Zielsignal vom Zielvektor (Zielsignal) und erhält den durch einen Vektor aus dem stochastischen Codebuch (a4) noch zu rekonstruierenden Teil des Zielsignals. Die Suche in den einzelnen Codebüchern erfolgt nach dem gleichen Prinzip. In beiden Fällen wird der Quotient aus dem Quadrat der Korrelation des gefilterten Anregungs-Codevektors mit dem Zielvektor und der Energie des gefilterten Zielvektors für alle Anregungs-Codevektoren berechnet. Derjenige Anregungs-Codevektor, der diesen Quotienten maximiert, wird als bester Anregungs-Codevektor angesehen, der das Fehlerkriterium (a5) minimiert. Die vorgeschaltete Fehlergewichtung (a6) gewichtet den Fehler entsprechend der Charakteristik des menschlichen Gehörs. Die Position des gefundenen Anregungs-Codevektors innerhalb des Anregungs-Codebuchs wird an den Decoder übertragen.

Durch die Berechnung des genannten Quotienten wird für jeden Anregungs-Codevektor implizit der richtige (Codebuch)Amplitudenfaktor (Verstärkung 1, Verstärkung 2) ermittelt. Nachdem der beste Kandidat aus beiden Codebüchern bestimmt ist, kann man durch eine gemeinsame Optimierung der Verstärkung den qualitätsmindernden Einfluß der sequentiell durchgeführten Codebuchsuche reduzieren. Dabei gibt man den ursprünglichen Zielvektor erneut vor und berechnet zu den nun ausgewählten Anregungs-Codevektoren passend die besten Verstärkungen, die sich meist geringfügig von denen unterscheiden, die während des Codebuchsuchens ermittelt wurden.

Beim CELP-Prinzip kann zum Auffinden des besten Anregungs-Codevektors jeder Kandidatenvektor einzeln gefiltert (a3) und mit dem Zielsignal verglichen werden.

Schließlich werden Filterparameter, Amplituden-faktoren und Anregungs-Codevektoren in binäre Signale umgesetzt und in einer festen Struktur eingebettet in Rahmen übertragen. Bei den Filterparmatern kann es sich um LPC (Linear Predictive Coding)-Koeffizienten, LTP (Long Term Prediction)-Indizes oder LTP (Long Term Prediction)-Amplitudenfaktoren handeln.

Die Leistungsfähigkeit eines bekannten, oben beschriebenen Verfahrens zur Fehlerverdeckung kann durch eine erfindungsgemäße sendeseitige Vorcodierung der Sprachparameter-Bits mit linearen Blockcodes deutlich gesteigert werden. Anders als bei konventionellen Kanalcodierverfahren, wird die hinzugefügte Redundanz nicht zu einer empfangsseitigen Fehlererkennung bzw. Fehlerkorrektur verwandt, sondern zu einer genaueren Bestimmung der für die Schätzung erforderlichen a posteriori-Wahrscheinlichkeiten.

Dieses Prinzip soll an einem einfachen Single Parity Check (SPC)-Code veranschaulicht werden. Dieser systematische Linearcode fügt den Sprachparameter-Bits ein zusätzliches Paritätsbit $x_p(i)$ hinzu. Dieses ist durch die Gleichung

$$x_p(i) = \sum_{j=1}^{w} \oplus \; x_j(i) \qquad\qquad (1.13)$$

bestimmt.

Das Paritätsbit $x_p(i)$ wird gemeinsam mit den übrigen Parameterbits übertragen. Empfangsseitig steht dem Parameterschätzer somit die zusätzliche Soft-Information des empfangenen Paritätsbits $z_p$ zur Verfügung. Gleichung 1.8 kann deshalb erweitert werden zu

$$p_{z_1,\dots,z_w,z_p|x,x_p}(z_1,\dots,z_w,z_p \mid x_j, x_p(i)) = p_{z|x}(z_p \mid x_p(i)) \cdot \prod_{k=1}^{w} p_{z|x}(z_k \mid x_k(i)).$$

$$(1.14)$$

Anschaulich kann der durch den zusätzlichen Faktor $p_{z|x}=(z_p|x_p(i))$ bewirkte Effekt so verstanden werden: Die a posteriori-Wahrscheinlichkeiten derjenigen Bitmuster $x_i$, deren Paritätsbit $x_p(i)$ mit dem tatsächlich empfangenen Wert $z_p$ übereinstimmen, werden vergrößert, alle anderen verringert. Dies soll an einem einfachen Beispiel veranschaulicht werden. Es wird die Quantisierung eines Parameters mit einem vierstufigen gleichmäßigen Quantisierer betrachtet. Die Quantisierungsstufen und die zegehörigen Bitcodes lauten:

|        |        |
|--------|--------|
| 0.75:  | +1,-1  |
| 0.25:  | +1,+1  |
| -0.25: | -1,+1  |

Tabelle fortgesetzt

| -0.75: | -1,-1 |
|---|---|

Sendeseitig wird in diesem Beispiel der Eintrag 0.25 ausgewählt, d.h. es wird die Bitfolge {+1,+1} gesendet. Aufgrund von Kanalstörungen wird eine gestörte Folge von Softwerten empfangen, die in L-Werte umgerechnet werden kann, z.B.
{9.1,-0.3}.

Hieraus ergeben sich für die Tabelleneinträge unter der Annahme, daß alle Einträge gleich häufig auftreten, die Wahrscheinlichkeiten:

| 0.75: | 0.574 |
|---|---|
| 0.25: | 0.426 |
| -0.25: | ~0 |
| -0.75: | ~0 |

Damit erhält man den Schätzwert
MS = 0.537.

Wird nun im Sinne der Erfindung ein zusätzliches Paritätsbit übertragen, dessen Empfangs-L-wert zu
5.3
angenommen wird, so erhält man die a posteriori-Wahrscheinlichkeiten

| 0.75: | 0.007 |
|---|---|
| 0.25: | 0.993 |
| -0.25: | ~0 |
| -0.75: | ~0 |

und damit den Schätzwert
MS' = 0.2535.

Dieses Beispiel zeigt, daß der empfangsseitig bestimmte Schätzwert aufgrund des zusätzlich übertragenen Paritätsbits deutlich näher am tatsächlich gesendeten Wert von 0.25 liegt. Eine Erweiterung dieses Verfahrens auf komplexere Linearcodes ist unmittelbar möglich.

Bei einer Ausführrugsvariante der Erfindung wird das Verfahren für den LPC-Index der 1. Stufe bei der Codierrate 6.1 kBits/s eingesetzt. Hierzu kommt ein verkürzter (13,9) Hamming-Code zum Einsatz. Simulationen zeigen, daß alleine durch Parameterschätzung bereits ein deutlicher Gewinn gegenüber harter Decodierung erzielt werden kann. Durch lineare Vorcodierung mit einem Paritätsbit bzw. dem (13,9) Hamming-Code läßt sich die Robustheit der Übertragung weiter steigern.

Durch die zusätzlich zu übertragenden 4 Paritätsbits erhöht sich die Nettodatenrate nach Sprachcodierung von 6.1 auf 6.3 kBit/s, was aufgrund der konstant zu haltenden Bruttodatenrate zu einem verminderten Fehlerschutz durch die Kanalcodierung führt. Informelle Hörtests zeigen jedoch, daß bei schlechten Kanalzuständen (C/I ≤ 4dB) die Verringerung der Fehlerrobustheit infolge des verminderten Kanal-Fehlerschutzes durch das Verfahren der linearen Vorcodierung überkompensiert wird, d.h. aufgrund der Vorcodierung ist eine deutliche Erhöhung der Sprachverständlichkeit festzustellen.

Figur 4 zeigt eine Prozessoreinheit PE, die insbesondere in einer Kommunikationseinrichtung, wie einer Basisstation BS oder Mobilstation MS enthalten sein kann. Sie enthält eine Steuereinrichtung STE, die im wesentlichen aus einem programmgesteuerten Mikrocontroler besteht, und eine Verarbeitungseinrichtung VE, die aus einem Prozessor, insbesondere einem digitalen Signalprozessor besteht, die beide schreibend und lesend auf Speicherbausteine SPE zugreifen können.

Der Mikrocontroler steuert und kontrolliert alle wesentlichen Elemente und Funktionen einer Funktionseinheit, die die Prozessoreinheit PE enthält. Der digitale Signalprozessor, ein Teil des digitalen Signalprozessors oder ein spezieller Prozessor ist für die Durchführung der Sprachencodierung bzw. Sprachdecodierung zuständig. Die Auswahl eines Sprachcodecs kann auch durch den Mikrocontroler oder den digitalen Signalprozessor selbst erfolgen.

Eine Input/Output-Schnittstelle I/O, dient der Ein/Ausgabe von Nutz- oder Steuerdaten beispielsweise an eine Bedieneinheit MMI, die eine Tastatur und/oder ein Display enthalten kann. Die einzelnen Elemente der Prozessoreinheit können durch ein digitales Bussystem BUS miteinander verbunden sein.

Anhand der Beschreibung kann ein Fachmann die Erfindung auch auf andere als in der Anmeldung erläuterte CELP-Codierverfahren anwenden.

**Patentansprüche**

1. Verfahren zur Fehlerverdeckung bei der Übertragung von Parameterwerten, bei dem

   - Parameterwerte in eine binäre Darstellung umgesetzt werden,
   - zumindest einem Teil der Parameterwerte in binärer Darstellung vor der Übertragung über einen gestörten Kanal sendeseitig erste redundante Information durch eine Vorcodierung durch einen linearen Blockcode hinzugefügt wird, und
   - die derart hinzugefügte erste redundante Information empfangsseitig nicht zur Fehlererkennung innerhalb der binären Darstellung der Parameter verwendet wird, sondern zur Schätzung der Parameterwerte verwendet wird.

2. Verfahren nach Anspruch 1, bei dem

   - die Parameterwerte zumindest teilweise aus einer sendeseitigen Quellencodierung resultieren,
   - den vorcodierten Parameterwerten in binärer Darstellung zweite redundante Information hinzugefügt wird,
   - nach einer Übertragung über einen gestörten Kanal empfangsseitig zweite redundante Information zur Fehlererkennung und/oder Fehlerkorrektur verwendet wird.

3. Verfahren nach Anspruch 2, bei dem
   die zweite redundante Information im Sinne einer Kanalcodierung hinzugefügt wird.

4. Verfahren nach einem der vorhergehenden Ansprüche, bei dem empfangsseitig die erste redundante Information im Sinne einer a posteriori Information zur Schätzung der Parameter verwendet wird.

5. Verfahren nach einem der vorhergehenden Ansprüche, bei dem die Schätzung gemäß einem Softbit-Quellendecodierverfahren, insbesondere einem Softbit-Sprachdecodierverfahren erfolgt.

6. Sendeeinrichtung zur Übertragung von Parameterwerten mit einer Prozessoreinheit, die derart eingerichtet ist, daß

   - Parameterwerte in eine binäre Darstellung umgesetzt werden,

   zumindest einem Teil der Parameterwerte in binärer Darstellung vor der Übertragung über einen gestörten Kanal sendeseitig erste redundante Information durch eine Vorcodierung durch einen linearen Blockcode hinzugefügt wird, wobei die derart hinzugefügte erste redundante Information empfangsseitig nicht zur Fehlererkennung innerhalb der binären. Darstellung der Parameter verwendet wird, sondern zur, Schätzung der Parameterwerte verwendet wird.

7. Empfangseinrichtung zum Empfang von Parameterwerten, die vor der Übertragung über einen gestörten Kanal sendeseitig in eine binäre Darstellung umgesetzt wurden, und denen erste vor der Übertragung über einen gestörten Kanal sendeseitig redundante Information durch eine Vorcodierung durch einen linearen Blockcode hinzugefügt wurde,
   mit einer Prozessoreinheit, die derart eingerichtet ist, daß die derart hinzugefügte erste redundante Information empfangsseitig nicht zur Fehlererkennung innerhalb der binären Darstellung der Parameter verwendet wird, sondern zur Schätzung der Parameterwerte verwendet wird.

**Revendications**

1. Procédé pour le masquage d'erreurs lors de la transmission de valeurs de paramètres, dans lequel

   - des valeurs de paramètres sont converties en une représentation binaire,
   - une première information redondante est ajoutée, côté émission, à au moins une partie des valeurs de paramètres en représentation binaire, avant la transmission par l'intermédiaire d'un canal perturbé, au moyen d'un précodage par un code en blocs linéaire, et
   - la première information redondante ajoutée de cette manière n'est pas utilisée, côté réception, pour la détection d'erreurs dans la représentation binaire des paramètres mais pour l'estimation des valeurs de paramètres.

**2.** Procédé selon la revendication 1, dans lequel

- les valeurs de paramètres résultent, au moins partiellement, d'un codage source côté émission,
- une deuxième information redondante est ajoutée aux valeurs de paramètres précodées en représentation binaire,
- une deuxième information redondante est utilisée, côté réception, pour la détection d'erreurs et/ou la correction d'erreurs après une transmission par l'intermédiaire d'un canal perturbé.

**3.** Procédé selon la revendication 2, dans lequel
la deuxième information redondante est ajoutée au sens d'un codage de canal.

**4.** Procédé selon l'une quelconque des revendications précédentes, dans lequel la première information redondante est utilisée, côté réception, au sens d'une information à postériori pour l'estimation des paramètres.

**5.** Procédé selon l'une quelconque des revendications précédentes, dans lequel l'estimation est réalisée suivant un procédé de codage source à soft bit, notamment un procédé de décodage de la parole à soft bit.

**6.** Dispositif d'émission pour la transmission de valeurs de paramètres avec une unité de processeur, qui est configurée de telle manière que

- les valeurs de paramètres sont converties en une représentation binaire,

qu'une première information redondante est ajoutée, côté émission, à au moins une partie des valeurs de paramètres en représentation binaire, avant la transmission par l'intermédiaire d'un canal perturbé, au moyen d'un précodage par un code en blocs linéaire, la première information redondante ajoutée de cette manière n'étant pas utilisée, côté réception, pour la détection d'erreurs dans la représentation binaire des paramètres mais pour l'estimation des valeurs de paramètres.

**7.** Dispositif de réception pour la réception de valeurs de paramètres qui ont été converties en une représentation binaire avant la transmission par l'intermédiaire d'un canal perturbé, et auxquelles une première information redondante a été ajoutée, côté émission, avant la transmission par l'intermédiaire d'un canal perturbé, au moyen d'un précodage par un code en blocs linéaire,
comprenant une unité de processeur, qui est configurée de telle manière que la première information redondante ajoutée de cette manière n'est pas utilisée, côté réception, pour la détection d'erreurs dans la représentation binaire des paramètres mais pour l'estimation des valeurs de paramètres.

**Claims**

**1.** Method for error masking in the transmission of parameter values, in which

- parameter values are converted into a binary representation,
- first redundant information is added at the transmitting end at least to a portion of the parameter values in binary representation by a precoding by a linear block code before transmission over a faulty channel, and
- the first redundant information added in this way is not used at the receiving end for error detection within the binary representation of the parameters, but is used to estimate the parameter values.

**2.** Method according to Claim 1, in which

- the parameter values result at least partially from a source coding at the transmitting end,
- second redundant information is added to the precoded parameter values in binary representation, and
- second redundant information is used at the receiving end for error detection and/or error correction after transmission over a faulty channel.

**3.** Method according to Claim 2, in which
the second redundant information is added for the purpose of channel coding.

4. Method according to one of the preceding claims, in which at the receiving end the first redundant information is used as a posteriori information to estimate the parameters.

5. Method according to one of the preceding claims, in which the estimation is performed in accordance with a soft bit source decoding method, in particular a soft bit speech decoding method.

6. Transmitting device for transmitting parameter values, having a processor unit which is set up in such a way that

   - parameter values are converted into a binary representation, first redundant information is added at the transmitting end by precoding by a linear block code at least to a portion of the parameter values in binary representation before transmission over a faulty channel, the first redundant information added in such a way being used at the receiving end not for error detection within the binary representation of the parameters, but being used to estimate the parameter values.

7. Receiving device for receiving parameter values which have been converted into a binary representation at the transmitting end before transmission over a faulty channel, and to which first redundant information has been added at the transmitting end by precoding by a linear block code before transmission over a faulty channel, and having a processor unit which is set up in such a way that the first redundant information added in this way is used at the receiving end not for error detection within the binary representation of the parameters, but is used to estimate the parameter values.

# FIG 1

Q —qs— QE —db— CE —x— CH

S —qs— QD —db— CD —y— CH

# FIG 3

$n_k$

X — PC —$x_k$— ⊕ —$z_k$— S — $\hat{X}$

# FIG 2

EP 1 093 690 B1

# FIG 4